# EUROPEAN PATENT APPLICATION

(11) **EP 2 305 457 A1**
(43) Date of publication of application: **06.04.2011**
(21) Application number: 10177183.0
(22) Date of filing: 16.09.2010
(51) Int. Cl.: B32B 3/24, B44C 5/04, B44F 1/06, E04F 13/08, E04F 13/10, G09F 13/06

(54) **Covering element**

(30) Priority: 16.09.2009 IT VR20090139
(71) Applicant: Menotti Specchia S.r.l., 37047 San Bonifacio (VR) (IT)
(72) Inventor: Godi, Gabriele, 37047 San Bonifacio (IT); Calchi Novati, Stefano, 20122 Milano (IT)
(74) Representative: Fisauli, Beatrice A. M.

(57) **Abstract**

A covering element (10) comprises a first superficial wooden layer (12) and a second layer (14) in which at least a through-hole (16) or a transparent portion which intercepts at least a portion (17) on the first superficial layer (12) is obtained. A light source (120) actuated by control is applied on the second layer (14) so that when the light source (120) is not active, the first superficial layer (12) is visible in a uniform way while when the light source (120) is active, only the at least a portion (17) of the first superficial layer (12) corresponding to the at least a through-hole (16) and/or transparent portion of the second layer (14) is illuminated.

## Description

The present invention refers, in general, to a covering element. More particularly, it refers to a covering element which is to be applied on ceilings, walls, floors or other surfaces and comprises one or more particularly shaped layers to obtain a particular aesthetical appearance.

As is known, the inner and outer rooms are always studied by architects and designers to obtain pleasant and original rooms. To this end, particular coverings are chosen to cover the surfaces or special elements are inserted to make the surfaces more beautiful.

A material that often is used to cover floors, walls and ceilings is wood, and even a high-quality wood.

However, said surfaces are not very dynamic in the sense that once the elements of which the surfaces are made, have been fixed, it is no more possible to change shape or color unless said elements are replaced or a superficial working is made.

The aim of the invention is to carry out a covering element to cover surfaces such as walls, floors, ceilings so as to show particular aesthetic effects. Another aim is to carry out a covering element the aesthetical effects of which may be modified according to the need of the user.

Said aims and advantages are reached according to the present invention through a covering element comprising a first superficial layer and a second layer, **characterized in that** said first superficial layer is made of wood and said second layer is provided with at least a through-hole which intercepts at least a portion on the first superficial layer, said second layer being put on a light source actuated by control so that when the light source is not active, the superficial layer is visible in a uniform way but when the light source is active, only the at least a portion of the first superficial layer corresponding to the at least a through-hole and/or transparent portion of the second layer is illuminated.

In case the covering element consists only of a first superficial wooden layer and a second perforated layer, the covering element may be mounted on a conventional lighting structure. In this way, it is possible to obtain a paneling comprising one or more covering elements according to the invention. When the light is off, the paneling makes visible the effect of the simple covering but when the light is on, the paneling makes visible the portions of the superficial layer that correspond with the holes of the second perforated layer and creates particular light effects.

The covering element according to the present invention may comprise a third layer in which a light source is included, for instance LEDs, provided with suitable feeding connections. In this way, it is possible to obtain an independent covering element for which it is necessary only to arrange the suitable feeding cables.

As an advantage, the covering element may comprise a reinforcing intermediate layer between the first superficial layer and the second perforated layer. The intermediate layer may be made of a transparent material in order to let the light pass through.

In order to avoid a dispersion of the light emitted by the light source and to convoy the light to the first superficial layer, a reflecting element may be coupled with the surface of the third layer, opposite to the surface fixed on the second layer.

The covering element may comprise the first superficial layer made of a chopped wood so as to obtain a reduced thickness allowing light to pass through. In this way, the lighted sectors are put in evidence and at the same time, the covering element maintains the typical veins of wood. Advantageously, elements made of a transparent material may be inserted in the one or more holes obtained in the second layer. The shape of these transparent elements is homologous to the second layer and the thickness of these transparent elements is the same as the second layer. In this way, the second layer acts as a bearing structure for the first superficial layer. Advantageously, one or more luminous bodies may be inserted in the one or more holes obtained in the second layer so that said light sources light only one or more portions of the first superficial layer corresponding with said holes. In this way, it is possible to obtain a covering element according to the invention with a reduced thickness and ready to be applied on the surfaces without the need of arranging a light source on said surfaces.

Further features and details of the invention will be better understood from the following specification that is given as a non-limiting example, as well as from the accompanying drawings wherein:
Figure 1 is a side cross view of a covering element according to the invention;
Figure 2 is an axonometric view of the element in Figure 1;
Figure 3 is a side cross view of a covering element according to a first variant of the invention;
Figure 4 is a side cross view of a covering element according to a second variant of the invention;
Figure 5 is a side cross section of a covering element according to a third variant of the invention;
Figure 6 is an axonometric view of the element in Figure 5.

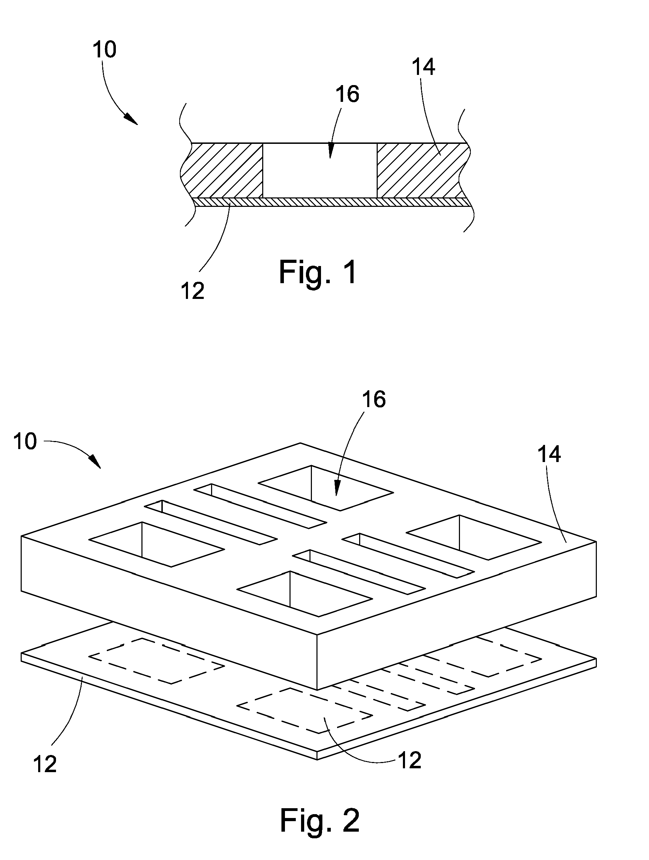

With reference to the accompanying figures, in particular Figures 1 and 2, number 10 denotes a covering element which comprises two layers 12, 14 which are joined together, for instance by an adhesive. In particular, the first superficial layer 12 is made of a veneered wood and the second layer 14 is made, for instance, in MDF. Through-holes 16 are obtained in the second layer 14 (in Figure 1 only one hole is represented) in order to obtain a panel showing the wished pattern.

Obviously, the materials used for the two layers may be different according to the need of the user of the element 10.

The covering element 10 according to the present invention may be applied as covering of conventional lamps so that the first superficial layer 12 remains visible.

When the lamp is switched off, the element 10 acts just as a simple covering and the veins of the wood of the superficial layer are visible. When the lamp is switched on, light can pass through the second layer 14 only through the through-holes 16. In this way, the first superficial layer 12 is enlightened only in the portions 17 corresponding with the through-holes 16.

The light may pass through the first superficial layer 12 having a reduced thickness on individualizing only the portions 17. In this way, it is possible to obtain particular effects for the presence of illuminated sectors adjacent to darker sectors.

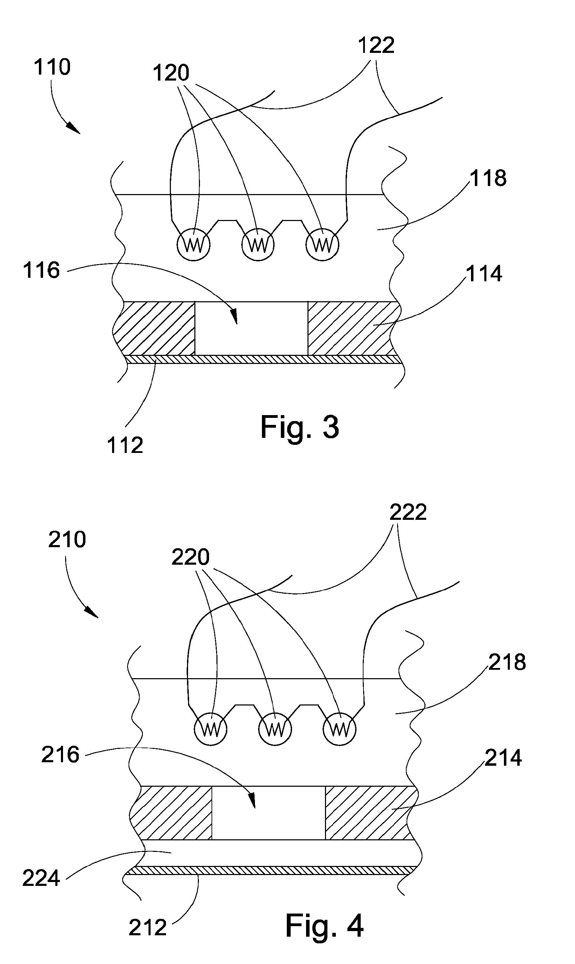

It is thus obtained a paneling which comprises one or more elements 10 according to the invention. When the light is off, the paneling shows the effect of the simple covering while when the light is on, the paneling creates visual effects of several kind since the light passes only through certain sectors. According to a first variant of the invention as represented in Figure 3, a covering element 110 comprises a first superficial wooden layer 112 which has a reduced thickness and is fixed on a second layer 114 in which through-holes 116 are obtained. The modular element 110 comprises an illuminating layer 118 in which two light sources 120, for instance LEDs, which are provided with suitable feeding connections 122.

According to this variant, the covering element 110 is independent and does not need to be supported by lamps that have been already positioned. The covering element 110 is an independent illuminating body and therefore, it is not necessary to install beforehand any additional lighting plant since it is just sufficient to arrange beforehand an electric feeding for the element 110 itself. According to a second variant of the invention as represented in Figure 4, a covering element 210 comprises a first superficial wooden layer 212 showing a thin thickness and a second layer 214, which is made for instance in MDF and in which through-holes 216 are obtained. The modular element 210 comprises an illuminating layer 218 in which light sources 220 are inserted together with their respective suitable feeding connections 222.

A rigid transparent intermediate layer 224 is inserted between the first layer 212 and the second layer 214. For instance, said layer 224 is a panel of polycarbonate which supports the first superficial layer 212 of thin thickness so that said layer 212 is protected against damages or strokes and the sectors of the through-holes 216 are prevented from a bending and from penetrating the holes themselves. At the same time, the intermediate transparent layer 224 allows light to pass on intercepting only the sectors corresponding to the through-holes 216.

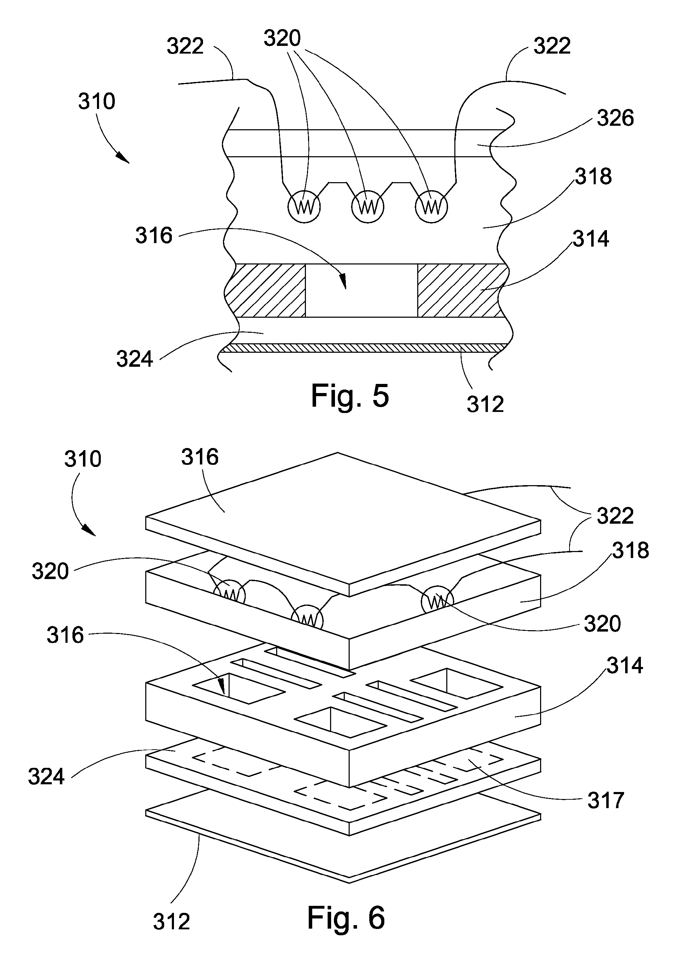

According to a third variant of the invention as represented in Figures 5 and 6, a covering element 310 comprises a first superficial layer 312 in veneered wood and a second layer 314, for instance in MDF, in which through-holes 316 are obtained.

A rigid transparent intermediate layer 324 is inserted between the first layer 312 and the second layer 316. Said layer 324 acts as a supporting structure for the first layer 312.

An illuminating layer 318 is coupled with the second layer 314 and comprises light sources 320 such as LEDs which are connected with one another and comprise feeding connections 322.

A reflecting layer 326, for instance a panel in forex, is put on the illuminating layer.

According to a further variant of the invention, the first wooden layer is coupled with a second transparent layer on which one or more images are printed so as to make transparent only certain portions of the transparent layer. Said second transparent layer may be supported by existing illuminating structures or may comprise a light source on the face of the second layer, said face being opposite to the face joined with the first layer. The invention has been described according to some embodiments. However, it is to be intended that the scope of the invention includes other variants. For instance, the through-holes may comprise, in their inside, transparent elements having a corresponding shape; in this way, the second layer in which the openings are obtained acts as a supporting structure for the first superficial layer.

In addition, the illuminating means may be inserted in the second layer in the inside of the through-holes so as to reduce the thickness of the covering element.

## Claims

1. Covering element (10; 110; 210; 310) comprising a first superficial layer (12; 112; 212; 312) and a second layer (14; 114; 214; 314), **characterized in that** said first superficial layer is made of wood and said second layer is provided with at least a through-hole (16; 116; 216; 316) and/or a transparent portion which intercepts at least a portion (17; 317) on the first superficial layer, said second layer being put on a light source (120; 220; 320) actuated by control so that when the light source is not active, the superficial layer is visible in a uniform way but when the light source is active, only the at least a portion of the first superficial layer corresponding to the at least a through-hole and/or transparent portion of the second layer is illuminated.

2. Covering element (10; 110; 210; 310) according to claim 1, wherein a light source (120; 220; 320) is embodied in a third layer (118, 218, 318) connected with said first layer (12; 112; 212; 312).

3. Covering element (210; 310) according to any of the preceding claims, wherein an intermediate stiffening layer (224; 324) is comprised.

4. Covering element (210; 310) according to claim 3, wherein the intermediate layer (224; 324) is made of a transparent material.

5. Covering element (310) according to any of claims 2 to 4, wherein a reflecting element (326) is coupled on the surface of the third layer (318), opposite to the one fixed on the second layer (314).

6. Covering element (110; 210; 310) according to any of claims 2 to 5, wherein the third layer (118, 218, 318) comprises at least a LED (120; 220; 320).

7. Covering element (10; 110; 210; 310) according to any of the preceding claims, wherein the first superficial layer (12; 112; 212; 312) is made of sheared wood.

8. Covering element according to any of the preceding claims, wherein a homologous transparent element having the same thickness as said second layer is inserted in the at least a hole of the second layer.

9. Covering element according to any of claims 1 to 7, wherein a luminous body is inserted in the at least a hole of the second layer to illuminate only the at least a portion of the first superficial layer corresponding to the at least a hole.
